# EUROPEAN PATENT APPLICATION

(11) **EP 3 677 627 A1**
(43) Date of publication of application: **08.07.2020**
(21) Application number: 19150253.3
(22) Date of filing: 03.01.2019
(51) Int. Cl.: C08K 3/34, C08K 3/36, C09D 175/04, C08K 9/02, C08K 9/12, C09D 7/62, C08G 18/08, C04B 26/16, C09D 5/24

(54) **WATER-BASED POLYURETHANE DISPERSION FOR ELECTRICALLY CONDUCTIVE COATINGS OR SEAL COATS**

(71) Applicant: SIKA TECHNOLOGY AG, 6340 Baar (CH)
(72) Inventor: Pusel, Thomas, 71282 Hemmingen (DE); Strauss, Susanne, 70597 Stuttgart (DE); Grötzinger, Jochen, 73525 Schwäbisch Gmünd (DE)
(74) Representative: Sika Patent Attorneys

(57) **Abstract**

The invention relates to a water-based polyurethane dispersion comprising a polyurethane, preferably a chain-extended polyurethane, at least one ionic liquid (IL) and at least one transparent electrically conductive pigment (CP).

The water-based polyurethane dispersion is suitable as a transparent or translucent dissipative coating or seal coat that has a resistance to ground of less than 10⁷ ohms, determined according to IEC 61340-4-1. Mentioned electrical resistance can also be obtained at a low absolute humidity.

## Description

### Technical field

The invention relates to a water-based polyurethane dispersion, to a method for producing a dissipative coating with the water-based polyurethane dispersion, to a dissipative coating system, and to the use of the water-based polyurethane dispersion for forming dissipative layers.

### Prior art

Many segments of industry nowadays impose exacting requirements on optimum ambient conditions. Of the utmost importance in this context, in particular, is the prevention of uncontrolled electrostatic charging and discharge.

Electrostatic charging and discharge comes about as a result of contact, friction or separation of two materials. In the process, one material is positively charged, and the other negatively charged. In the case of floor coatings, this charge is generated by foot traffic or wheeled traffic, with rubber soles or rubber wheels, for example. Charging may also result from sweeping air on insulating surfaces, e.g., paints or coatings.

In sensitive areas, therefore, the requirement is for floors and walls with low resistances to ground, which dissipate electrostatic charging immediately and in a controlled manner. For electrostatically dissipative coatings of this kind, there are numerus standards in existence, containing test methods for assessing coatings for their suitability in respect of electrostatic or electrical behavior.

DIN EN 61340-4-1, for example, describes test methods for determining the electrical resistance of floor coverings and laid floors. In DIN EN 61340-4-5, the electrostatic safety is evaluated in combination with regard to the electrical resistance and the chargeability of people, footwear, and floor coverings.

There are coating systems known with ESD protection (ESD = "electrostatic discharge"), i.e., with protection from electrostatic discharge. Employed normally are dissipative systems based on epoxy resin or polyurethane. It is also known that wet concrete has sufficient conductivity to meet the standards of the DIN EN 61340 series.

As mentioned before, the resistance to ground and also the system resistance can be determined in accordance with the DIN EN 61340-4-1. A dissipative coating or seal coat, for example, according to the DIN EN 61340 series, is deemed dissipative or electrostatically dissipative if it has a resistance to ground of less than 10⁹ ohms. Coats having a greater resistance to ground are not dissipative.

However, in order to have sufficient safety margin, especially with respect to environmental conditions with very low absolute humidity, a resistance to ground of less than 10⁷ ohms is desirable.

Floors made from synthetic resins are commonly not conductive or dissipative. There are, nevertheless, several options for achieving ESD properties.

First of all, solid conductive particles of carbon black or metal, for example, may be added to the synthetic resin composition in order to achieve conductivity. These conductive particles are generally very expensive and have an intrinsic color, thereby inevitably lowering the shade selection and hence the decorative appeal of the product. Hence these substances have the disadvantage of not being transparent and thus always resulting in a darkening of the materials to which they have been added. There use is therefore restricted to dark to black flooring.

Another option is to use organic salts which are soluble in the synthetic resin matrix, and which provide sufficient electrical conductivity. These options, however, reduce the mechanical and chemical resistance of the coating system.

A further option is the use of ionic liquids which are soluble in the synthetic resin matrix but the electrical resistance is strongly dependent on the humidity. At a very low absolute humidity they do not exhibit adequate electrical conductivity and their performance does not meet the standards of the DIN EN 61340 series.

DE 102006015775 A1 relates to a high-build floor coating having antistatic properties, whose antistatic component comprises solutions of metal salts in ionic liquids - for this purpose, for example, ammonium salts or imidazolium salts are used in the coating composition.

### Summary of the invention

The object of the invention was therefore that of providing a composition for producing dissipative floor coatings which no longer have the above-described disadvantages of the prior-art systems.

The composition is able to form transparent or translucent coatings which satisfy the requirements of the standards of the DIN EN 61340 series and exhibits a sufficient safety margin with a resistance less than 10⁷ ohms determined according to DIN EN 61340-4-1 even at a very low absolute humidity.

The composition is also to be suitable for coating systems featuring ESD requirements.

The object has surprisingly been achieved by means of water-based polyurethane dispersion according to claim 1.

The invention therefore relates to a water-based polyurethane dispersion comprising
A) a polyurethane, preferably a chain-extended polyurethane,
B) 2 - 10 weight-% of at least one ionic liquid (IL), based on the total weight of the water-based polyurethane dispersion, and
C) 3.5 - 10 weight-% of at least one transparent electrically conductive pigment (CP), based on the total weight of the water-based polyurethane dispersion.

The addition of the at least one ionic liquid (IL) and the at least one transparent electrically conductive pigment (CP) raises the conductivity of the coating or seal coat obtainable by means of the composition, thus allowing electrical current to be transported from the surface through the coating/seal coat onto a conductive varnish, and/or allowing the current to be transported through the coating without conductive varnish down to grounding points. Dissipative coatings or seal coats are obtained. Such coatings and seal coats satisfy the requirements of the standards of the DIN EN 61340 series and exhibits a sufficient safety margin with a resistance less than 10⁷ ohms determined according to DIN EN 61340-4-1 even at a very low absolute humidity.

The water-based polyurethane dispersion is outstandingly suitable for producing floor coatings or floor seal coats.

Preferred embodiments of the composition are reproduced in the dependent claims.

### Brief description of the drawing

- Fig. 1:: Schematic diagram of an ESD coating system
- Fig. 2:: Schematic diagram of a further ESD coating system

### A certain embodiment of the invention

Compound names beginning with "poly" identify substances which formally per molecule contain two or more of the functional groups which occur in their name. The compound may be monomeric, oligomeric, or polymeric. A polyamine, for example, is a compound having two or more amino groups. A polyepoxide is a compound having two or more epoxy groups.

The difference between coating and seal coat lies essentially in the amount of the composition of the invention that is applied. A seal coat is a coat for which a relatively small amount of material is applied, to give coat thicknesses of up to about 500 µm. Coat thicknesses even greater are generally referred to as coatings, although the transition from seal coat to coating is not sharply defined.

Substance names beginning with "poly", such as e.g. polyol, polyisocyanate or polyurethane, designate substances which formally contain, per molecule, two or more of the functional groups occurring in their names. A polyol is e.g. a substance having two or more hydroxyl groups.

An isocyanate-terminated polymer is a polymer or prepolymer having at least one terminal isocyanate group, in particular two terminal isocyanate groups. The term prepolymer here generally refers to oligomers or polymers which are used as intermediate products for producing polymers with higher molecular weight.

Chain extenders are difunctional compounds, i.e. compounds having two functional groups which are reactive with functional groups, usually terminal functional groups, of a prepolymer so that the chain extender can react with the prepolymer to form a chain-extended polymer.

The average molecular weight is understood to mean the number average molecular weight, as determined using conventional methods, preferably by gel permeation-chromatography (GPC) using polystyrene as standard, styrene-divinylbenzene gel with porosity of 100 Angstrom, 1000 Angstrom and 10000 Angstrom as the column and tetrahydrofurane as a solvent, at 35°C. Water-based polyurethane dispersions are aqueous dispersions of polyurethane particles. The polyurethane particles are stabilized ionically or non-ionically. Accordingly, PUDs have been classified into three categories, namely anionic, cationic and non-ionic PUDs, wherein the PUD is stabilized by anionic groups, cationic groups or hydrophilic units, respectively, contained in the polyurethane. Hence, the water-based polyurethane dispersion of the invention can be an anionic, cationic or non-ionic water-based polyurethane dispersion.

Anionic PUDs are usually stable at alkaline pH values > 7. Cationic PUDs are usually stable at acid pH <7 and normally based upon alkylated or protonated tertiary amines. Non-ionic PUDs are non-ionisable and often stable over a very wide pH range.

The polyurethane, preferably the chain-extended polyurethane, of the water-based polyurethane dispersion may have ionic groups or hydrophilic non-ionic groups. The polyurethane, preferably the chain-extended polyurethane of the water-based polyurethane dispersion may have anionic groups such as carboxylate groups or sulfonate groups, cationic groups such as ammonium cations, e.g. alkylated or protonated secondary or tertiary amines, or non-ionic hydrophilic units such as polyethylene oxide units. The non-ionic hydrophilic units may be contained in the backbone chain of the polyurethane or are preferably contained in pendant or terminal groups of the polyurethane. The ionic groups, in particular carboxylate groups, may be pendant groups or contained in pendant side groups of the polyurethane.

It is preferred that the polyurethane, preferably the chain-extended polyurethane, has anionic groups such as carboxylate groups or sulfonate groups, in particular carboxylate groups.

The counter ion of the anionic groups, such as carboxylate groups, may be any conventional counter ion, e.g. alkali metal ions, alkaline earth metal ions, NH₄⁺ or organic ammonium ions. Organic ammonium ions having one or more organic groups, in particular alkyl groups, are preferred. The counter ion of the cationic groups, such as ammonium groups, may be any conventional counter ion, e.g. OH⁻, halogenid anions or complex anions such as BF₄⁻. Particularly preferred is trimethyl ammonium or triethyl ammonium.

Preferably, the water-based polyurethane dispersion contains 40 to 70 % by weight, preferably 50 to 60 % by weight, of water, based on the total weight of the water-based polyurethane dispersion.

Preferably, the water-based polyurethane dispersion contains 20 to 55 % by weight, preferably 25 to 50 % by weight, of the polyurethane, preferably the chain-extended polyurethane, more preferably the chain-extended polyurethane having carboxylate groups, based on the total weight of the water-based polyurethane dispersion.

The chain-extended polyurethane in the PUD is preferably the reaction product of an isocyanate-terminated polyurethane prepolymer and at least one chain extender, which is preferably a polyamine, wherein the isocyanate-terminated polyurethane prepolymer preferably has ionic groups, in particular carboxylate groups.

In the chain-extended polyurethane, the acid groups or amine groups, if present, are completely or partially converted into ionic groups with a base or an acid. Suitable starting materials are described in the following.

The isocyanate-terminated polyurethane prepolymer is preferably a reaction product of
- at least one first polyol,
- at least one second polyol, which is different from the first polyol, and
- at least one diisocyanate,
wherein the at least one second polyol is preferably selected from a polyether polyol having ethylene oxide units, a polyol having an acid group, preferably a carboxyl group, and a polyol having an amine group.

Most preferred is a second polyol having a carboxylate group.

The at least one first polyol may be one or more polyols. There is a huge variety in the potential polyols. The polyol may have two or more hydroxyl groups, e.g. a diol or a triol or a mixture thereof. The at least one polyol is however preferably one or more diols, e.g. one diol or a mixture of two or more diols.

Examples of suitable first polyols are polyoxyalkylenepolyols, also referred to as polyetherpolyols, polyesterpolyols, polycarbonatepolyols, poly(meth)acrylate polyols, polyhydrocarbon-polyols, polyhydroxy-functional acrylonitrile/butadiene copolymers and mixtures thereof, wherein said polyols are preferably diols.

Examples of polyetherpolyols are polyoxyethylenepolyols, polyoxypropylenepolyols and polyoxybutylenepolyols, in particular polyoxyethylenediols, polyoxypropylenediols, polyoxybutylenediols, polyoxyethylenetriols and polyoxypropylenetriols. Further examples of polyetherpolyols are so-called ethylene oxide-terminated ("EO-endcapped", ethylene oxide-end-capped) polyoxypropylenepolyols, or styrene-acrylonitrile-grafted polyetherpolyols.

Examples of polyesterpolyols are polyesterdiols obtained from the reaction of difunctional alcohols, such as 1,2-ethanediol, diethylene glycol, 1,2-propanediol, dipropylene glycol, 1,4-butanediol, 1,5-pentanediol, 1,6-hexanediol, 1,4-cyclohexane dimethanol or neopentylglycol, with dicarbonic acids or anhydrides or esters thereof, such as succinic acid, glutaric acid, adipinic acid, suberic acid, sebacinic acid, dodecane dicarbonic acid, maleinic acid, fumaric acid, phthalic acid, isophthalic acid, terephthalic acid or hexahydro terephthalic acid, or polyesterdiols obtained from the polymerization of lactones, particularly ε-caprolactone.

Examples of polycarbonatepolyols are polycarbonatepolyols obtained from the reaction of difunctional alcohols, such as 1,2-ethanediol, diethylene glycol, 1,2-propanediol, dipropylene glycol, 1,4-butanediol, 1,5-pentanediol, 1,6-hexanediol, 1,4-cyclohexane dimethanol or neopentylglycol or mixtures thereof, with dialkyl carbonates or diaryl carbonates oder phosgene.

Further examples of polyols to be used in the present invention are polyhydroxy-functional fats and oils, for example natural fats and oils, or polyols obtained by chemical modification of natural fats and oils, so-called oleochemical polyols.

The first polyol contains preferably at least one polyester polyol or polycarbonate polyol. Such polyols enable rigid PUDs with high strength.

The first polyol preferably has an average molecular weight of from 400 to 10'000 g/mol, preferably from 500 to 8'000 g/mol, more preferably from 500 to 4'000 g/mol, most preferably from 500 to 2'000 g/mol, and/or an average OH functionality in the range from 1.6 to 2.5, preferably from 1.8 to 2.0.

A particularly preferred polyol to be used as the first polyol is a polycarbonate diol, preferably with an average molecular weight of from 500 to 2'000 g/mol. Such polyols are commercially available. Such polyols enable rigid PUDs with high strength

The at least one second polyol is different from the at least one first polyol. It is preferably selected from a polyether polyol having ethylene oxide units, a polyol having an acid group, preferably a carboxyl group, and a polyol having an amine group.

Examples of a polyether having ethylene oxide units are polyetherpolyols having ethylene oxide units such as polyethylene glycol, or polyethylene glycol dialkylethers or polyethylene glycol monoalkylethers, wherein two primary hydroxyl groups are incorporated in the polymer. A preferred polyether having ethylene oxide units may be a difunctional polyethylene glycol monomethyl ether, wherein two primary hydroxyl groups are incorporated in the polymer such as Ymer® N120 (from Perstorp).

The polyol having an acid group is preferably a diol having a carbonic or sulfonic acid group, preferably a carboxyl group. Particularly preferred is dimethylol propionic acid (DMPA) or dimethylol butanoic acid (DMBA).

The polyol having an amine group has preferably one or two, particularly one, tertiary amine group. It is preferably a diol. Particularly preferred is N-alkyl-diethanolamine, wherein alkyl is preferably C₁-C₄-alkyl such as ethyl or methyl. N-methyl-diethanolamine is particularly preferred.

Particularly preferred as second polyol is a polyol having a carboxyl group, such as dimethylol propionic acid (DMPA) or dimethylol butanoic acid (DMBA). Most preferred is DMPA.

Low molecular weight di- or polyhydric alcohols, e.g. with a molecular weight of less than 250 g/mol, can be used together with the first and the second polyol. Examples thereof are 1,2-ethanediol, 1,2- and 1,3-propanediol, neopentylglycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimeric fatty alcohols, 1,1,1-trimethylolethane, 1,1,1-trimethylolpropane, glycerol, pentaerythritol, sugar alcohols, such as xylitol, sorbitol or mannitol, sugars, such as sucrose, other alcohols having a higher functionality, low molecular weight alkoxylation products of the abovementioned di- and polyhydric alcohols, and mixtures thereof.

The at least one diisocyanate may be one or more diisocyanate. There is a huge variety in the potential diisocyanates. Suitable diisocyanates are those which are amply known in polyurethane chemistry, or combinations thereof. Suitable diisocyanates are aliphatic or aromatic diisocyanates, wherein aliphatic diisocyanates are preferred. Aliphatic diisocyanates include cycloaliphatic diisocyanates wherein at least one isocyanate is bound to cycloaliphatic carbon atom. Cycloaliphatic diisocyanates are particularly suitable.

Examples of suitable aliphatic diisocyanates, including cycloaliphatic diisocyanates are 1,6-diisocyanatohexane (HDI), 1-isocyanato-5-isocyanatomethyl-3,3,5-trimethylcyclohexane (IPDI), bis-(4-isocyanatocyclohexyl)methane (H₁₂ MDI), 1,3-bis(1-isocyanato-1-methylethyl)benzene (m-TMXDI or TMXDI) and/or technical-grade isomer mixtures or derivatives thereof. Examples of suitable aromatic polyisocyanates are 2,4(6)-diisocyanatotoluene (TDI) and bis(4-isocyanatophenyl)methane (MDI).

Particularly preferred as diisocyanate is bis(4-isocyanatocyclohexyl) methane, isophorone diisocyanate or TMXDI.

Most preferred is bis(4-isocyanatocyclohexyl) methane. This diisocyanate enables rigid PUDs with high strength.

If the isocyanate-terminated polyurethane prepolymer contains carboxyl groups, these are at least partly neutralized with a suitable base and converted into carboxylic anions. The neutralization typically takes place after the reaction of the polyols with the diisocyanate is completed and before the isocyanate-terminated polyurethane prepolymer is mixed with water.

Examples of suitable bases for neutralization are tertiary amines such as trimethylamine, triethylamine, triisopropylamine N,N-dimethylethanolamine, N-methyldiethanolamine, N-methyldiisopropanolamine, dimethylisopropanolamine, N-methylmorpholine, N-ethylmorpholine or triethanolamine, or alkali metal hydroxides such as lithium hydroxide, sodium hydroxide, or potassium hydroxide or mixtures thereof.

Preferred thereof are trimethylamine, triethylamine, n-ethyl morpholine or methyl diethanolamine or mixtures thereof. Particularly preferred is trimethylamine or triethylamine.

If the isocyanate-terminated polyurethane prepolymer contains amine groups, these are at least partly neutralized with a suitable acid and converted into ammonium cations. The neutralization typically takes place after the reaction of the polyols with the diisocyanate is completed and before the isocyanate-terminated polyurethane prepolymer is mixed with water.

Examples of suitable acids for neutralization are carboxylic acids such as acetic acid, HCI or phosphoric acid.

Finally, the isocyanate-terminated polyurethane prepolymer is mixed with water and chain extended with a suitable chain extender.

The chain extender may be selected from at least one of water, inorganic or organic polyamine having an average of about two or more primary and/or secondary amine groups, amine functional polyoxyalkylenes, ureas, or their combinations, wherein polyamines are preferred. Particularly preferred are diamines with two primary and/or secondary amine groups. Polyamines as used herein also refer to polyhydrazines, in particular dihydrazides. The polyamine is preferably a linear or branched alkylenediamine, e.g. a linear or branched C₂₋₁₂-alkylenediamine, or a cycloalkane or alkyl substituted cycloalkane having two amine groups.

Suitable examples of chain extenders include ethylene diamine (EDA), diethylenetriamine (DETA), 1,3-bisaminomethylbenzol (meta-xylenediamine or MXDA), aminoethylethanolamine (AEEA), urea or derivatives of urea, adipic dihydrazide, hexamethylenediamine (HAD), hydrazine, isophoronediamine (IPDA), 2-methylpentamethylenediamine (MPMD) or any desired combinations of these chain extenders.

Preferred chain extenders are EDA, MPMD or HDA.

For the production of dissipative coatings, electrically conductive floors with a defined resistance are generally necessary. The water-based polyurethane dispersion comprises at least one ionic liquid (IL) and at least one transparent electrically conductive pigment (CP) allowing the electrical conductivity of the coating to be adjusted.

Preferred ionic liquids (IL) which may be used in the present invention are selected from the list consisting of ethoxylated alkyl amides, glycerol stearates, fatty acid esters, cationic polyacylates, esters or ethers of polyols and sodium alkyl sulfonates, quaternary ammonium compounds, alkylphosphates, sodium dicyanamide and liquid salts, preferably quaternary ammonium compounds, sodium dicyanamide and liquid salts, most preferably liquid salts.

In case the ionic liquid (IL) is a liquid salt composed of a cation and an anion, the liquid salt preferably contains at least one cation selected from the group consisting of imidazolium, pyridinium, pyrrolidinium, phosphonium, ammonium and sulfonium, more preferably imidazolium and ammonium, most preferably imidazolium.

The ionic liquid (IL) preferably contains an anion selected from the group consisting of halogens, carboxylates, sulfates, sulfonates, thiocyanates, aluminates, borates, phosphates, phosphinates, amides, antimonates, imides and methides, more preferably amides. Most preferably the anion is dicyanamide.

It is preferred if the ionic liquid is water-soluble.

Preferably, the water-based polyurethane dispersion contains the ionic liquid (IL) in an amount of 3 - 8 weight-%, preferably 4 - 5 weight-%, based on the total weight of the water-based polyurethane dispersion.

It was found when adding 0 and 1 weight-% of ionic liquid (IL) into a composition containing 5 weight-% of transparent electrically conductive pigment (CP) that was similar to the formulation of E1 that a resistance of less than 10⁷ ohms could not be guaranteed at very low absolute humidity. Amount of more than 10 weight-% of ionic liquid (IL) were found to decrease the mechanical properties of the resulting coatings, especially tensile strength and hardness.

Further, it was surprisingly found that the inventive combination of ionic liquid (IL) and transparent electrically conductive pigment (CP) lead to coatings that did not show increase in electrical resistance after washability testing (TQC Scrub Abrasion and Washability Tester). Loss of electrical resistance due to the washing out of the ionic liquid is otherwise a known problem in the state of the art.

In contrast to carbon black and graphite, which impart a dark to black colour on the composition provided therewith, the transparent electrically conductive pigment (CP) can be employed in transparent or translucent coatings.

Suitable transparent electrically conductive pigments are based on substrates which are coated with a conductive layer. Suitable substrates are substrates selected from the list consisting of phyllosilicates, in particular synthetic or natural mica, glass, SiO₂, TiO₂, Al₂O₃, sericite, kaolin, talc and mixtures thereof.

Most preferably, the substrate is selected from the list consisting of natural mica, synthetic mica and SiO₂.

Preferably, the substrate has a spherical-form or a flake-form, more preferably a flake-form.

The electrically conductive layer preferably comprises a doped metal oxide or a doped metal-oxide mixture. The metal oxide is preferably tin oxide, zinc oxide, indium oxide, titanium dioxides or mixtures thereof. The said metal oxides are in doped form in the conductive layer, where the doping can be carried out with gallium, aluminium, indium, thallium, germanium, tin, phosphorus, arsenic, antimony, selenium, tellurium, tungsten and/or fluorine. The metal-oxide layer here may comprise one dopant or a mixture of various dopants. Preferred dopants, alone or in combination, are aluminium, indium, tellurium, fluorine, tungsten, phosphorus, antimony, very particularly preferably antimony.

In a particularly preferred embodiment, the conductive layer employed is antimony-doped tin oxide, antimony- and tellurium-doped tin oxide, tin-doped indium oxide, aluminium-doped zinc oxide, or fluorine-doped tin oxide, tungsten-doped tin oxide, tungsten- and phosphorus-doped tin oxides, or indium-doped zinc stannate. Particular preference is given to a conductive layer consisting of antimony-doped tin oxide. The tin to antimony weight ratio in this preferred embodiment is preferably 4:1 to 100:1, in particular 7:1 to 50:1. The proportion of the conductive layer, based on the substrate, is preferably 25-120% by weight, preferably 50-75% by weight.

The proportion of the dopant or dopant mixture in the conductive layer is preferably 0.1-30% by weight, in particular 2-15% by weight.

Preferably the transparent electrically conductive pigment (CP) have a particle size of between 1 and 250 µm, preferably between 2 and 200 µm, 2 and 100 µm, 2 and 60 µm and in particular between 10 and 60 µm, preferably determined by laser diffraction measurement.

Especially preferred transparent, electrically conductive pigments are selected from the list consisting of:
- natural and/or synthetic mica flakes coated with (Sn,Sb)O₂, preferably with a particle size of between 2 and 100 µm, 2 and 60 µm and in particular between 10 and 60 µm;
- quartz flour, spherical, coated with (Sn,Sb)O₂, preferably with a particle size of between 1 and 10 µm; and
- mixtures of (synthetic and/or natural) mica flakes and quartz flour, in each case coated with (Sn,Sb)O₂.

Examples of preferred pigments of this type are commercially available conductive pigments from Merck marketed under the name Iriotec®.

It is further preferred if the addition of the transparent electrically conductive pigment (CP) in the inventive amount does not increase the brightness difference (dL) of the dried water-based polyurethane dispersion more than 14, preferably more than 13. The brightness difference (dL) used to describe the opacity is preferably determined as described in the experimental part.

Preferably, the water-based polyurethane dispersion contains the transparent electrically conductive pigment (CP) in an amount of 3.5 - 8 weight-%, preferably 5 - 5.5 weight-%, based on the total weight of the water-based polyurethane dispersion.

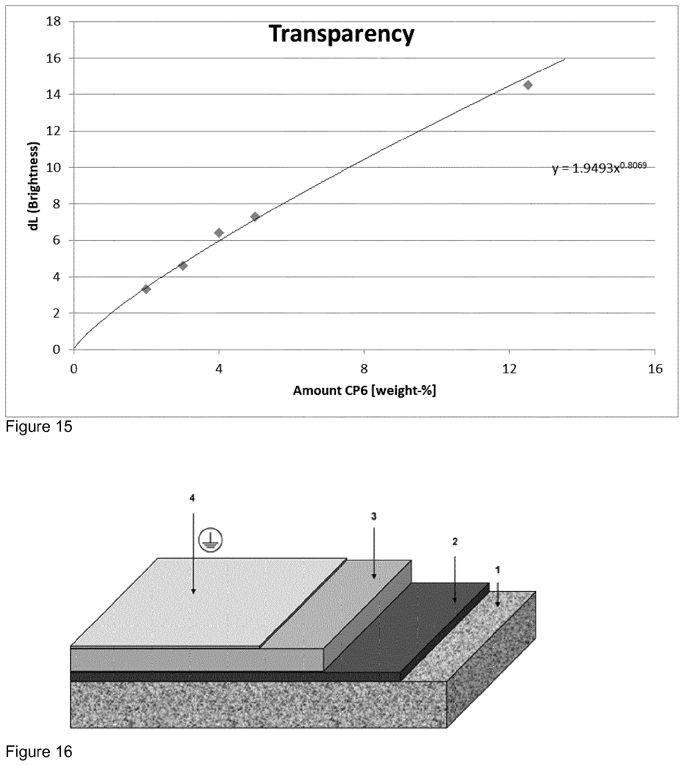

In case the amount is higher than 10%, the transparency or translucency of the resulting composition cannot be guaranteed. This is for example visible in the Delta L measurements of table 1 and visualized in Figure 15, especially with Ref.5.

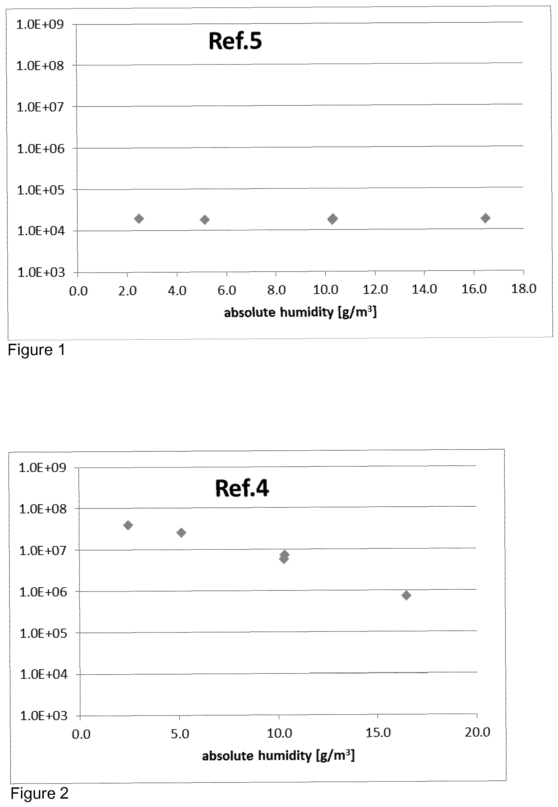

It was further found that amounts of less than 3.5 weight-% are only close to meet the standards of the DIN EN 61340-4-1 (<10 9 ohms) at very low absolute humidity. This is for example visible in the comparison of E1 and E2 with Ref. 2, Ref.3 and Ref.4, for example in the figures 2 - 4. Ref. 2, Ref.3 and Ref.4 only closely meet the standards of the DIN EN 61340-4-1, especially they have values higher than 1.0 E+7 Ω at absolute humidity of ≤ 5 %.

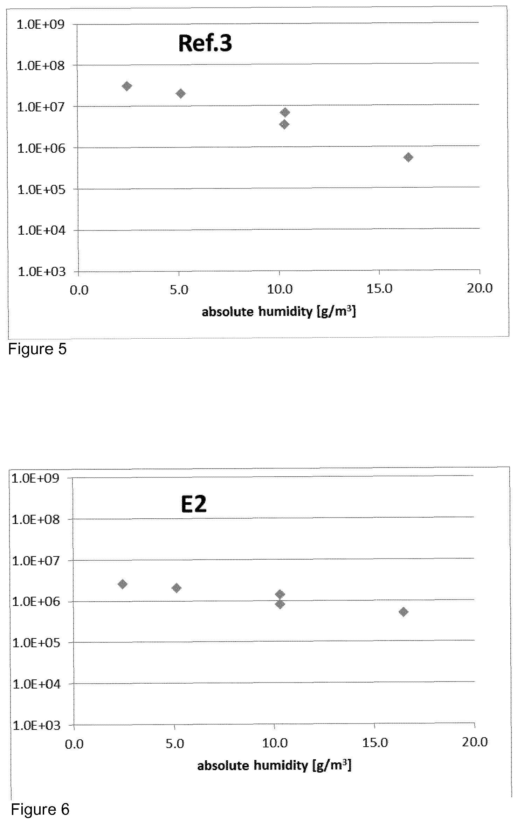

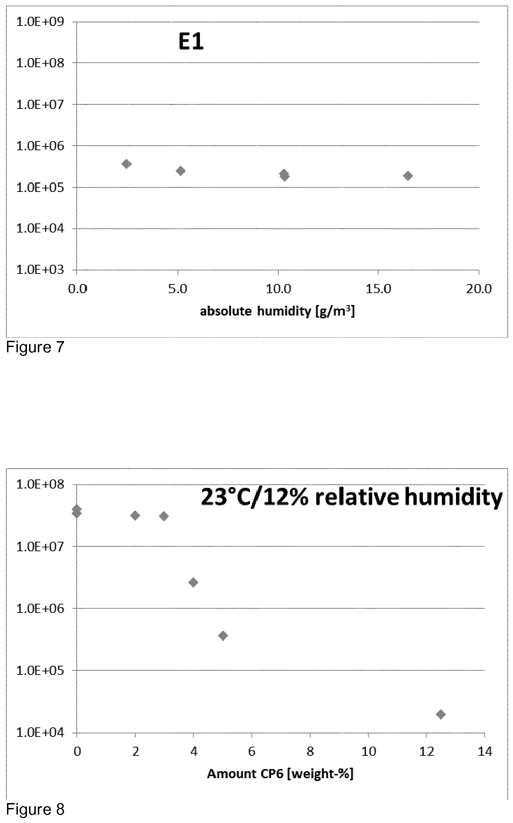

It was surprisingly found that in combination with an ionic liquid (IL), the inventive amount of transparent electrically conductive pigments (CP) lead to a significant decrease in electrical resistance at much lower amounts than in absence of said conductive pigments. This is for example visible in the comparison of figure 1 with figures 6 and 7.

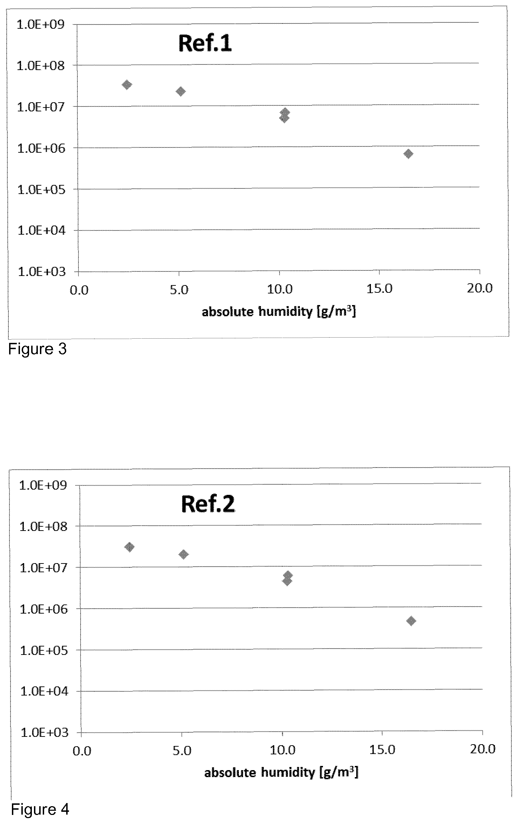

Further it is shown in figure 3 that a replacement of the conductive pigments (CP) with non-conductive mixture of mica, quartz and chlorite (Plastorit, Ref.1) does not lead to a decrease of electrical resistance.

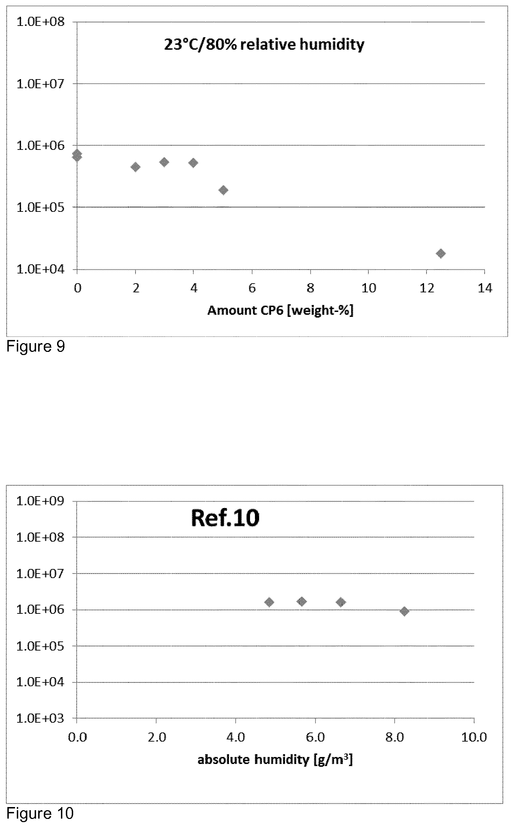

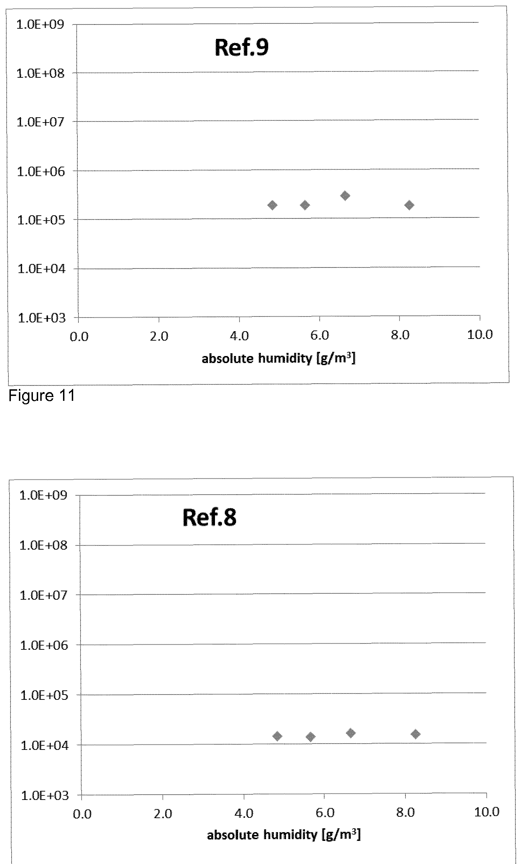

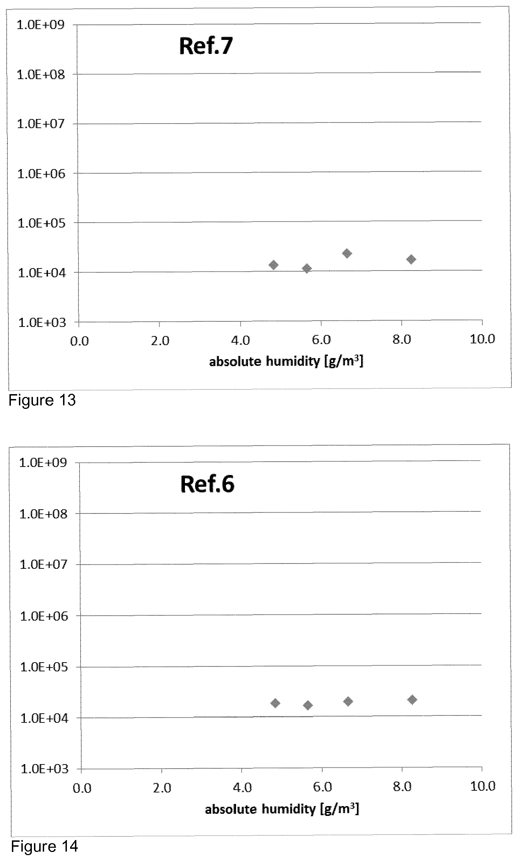

A comparison of the effectiveness of the reduction of resistance in systems based on polyurethane dispersions, even though in absence of ionic liquid (IL) and used in a total amount of 12.5 weight.-%, show that all the tested transparent electrically conductive pigments (CP) are able to reduce resistance but in a much higher total amount. This is shown in the figures 10 - 14.

It is further preferred that the inventive composition contains less than 2 wt.-%, less than 1 wt.-%, preferably less than 0.5 wt.-%, more preferably less than 0.2, most preferably less than 0.1 wt.-%, based on the total weight of the water-based polyurethane dispersion, of one or more pigments as coloring agents.

The pigments may be inorganic or organic pigments. Especially selected from the list consisting of inorganic pigments: titanium dioxide, carbon black, bismuth pigments, iron oxide pigments, chromium oxides, mixed phase oxide pigments, Prussian Blue, ultramarine, cobalt pigments, and chromate pigments, and examples of organic pigments: azo pigments and polycyclic pigments such as copper phthalocyanine, quinacridone, diketopyrrolopyrrole, perylene, isoindoline, dioxazine, and indanthrone pigments. The before mentioned pigments do not include the above mentioned transparent electrically conductive pigments (CP).

It is further preferred that the inventive composition contains less than 2 wt.-%, less than 1 wt.-%, preferably less than 0.5 wt.-%, more preferably less than 0.2, most preferably less than 0.1 wt.-%, based on the total weight of the water-based polyurethane dispersion, of one or more carbon allotropes.

Such carbon allotropes may be selected from the list consisting of optionally modified graphites, optionally modified graphenes, fullerenes, optionally modified carbon nanotubes, carbon blacks, especially conductive Carbon Black and carbon fibers.

It is further preferred that the inventive composition contains less than 2 wt.-%, less than 1 wt.-%, preferably less than 0.5 wt.-%, more preferably less than 0.2, most preferably less than 0.1 wt.-%, based on the total weight of the water-based polyurethane dispersion, of one or more fillers.

Such fillers can be inorganic and organic fillers, especially selected from the list consisting of ground or precipitated calcium carbonates, barite, talcs, finely ground quartzes, silica sand, dolomites, wollastonites, kaolins, micas, aluminum oxides, aluminum hydroxides, silicas, PVC powders, or hollow beads. The before mentioned fillers do not include the above mentioned transparent electrically conductive pigments (CP).

As and when required, the water-based polyurethane dispersion may comprise further, additional components.

Further optional additives which may be present are additives customarily used within this field, such as, for example, nonreactive diluents, solvents, or film-forming assistants, rheology modifiers, such as thickeners, for example; adhesion promoters, such as organoalkoxysilanes, for example; stabilizers to counter heat, light, or UV radiation; surface-active substances, such as wetting agents, flow control agents, deaerating agents, or defoamers, for example; and biocides.

The invention also relates to a method for producing a dissipative coating system, preferably a floor coating system, comprising a dissipative coating or a dissipative seal coat composed of the water-based polyurethane dispersion of the invention, the method comprising the following method steps:
a) applying the water-based polyurethane dispersion to a substrate,
b) optionally smoothing or deaerating the applied dispersion, and
c) drying the applied dispersion, to give the dissipative coating or seal coat.

Application of the water-based polyurethane dispersion and drying take place advantageously for example at temperatures in the range from 5 to 40°C.

The substrate may comprise any desired material. Preferably it is a floor covering, made of concrete, mortar, or screed, for example, which may optionally have a coating, such as a scratchwork filler coating or a primer coating and/or another coating. The other coating of the substrate, to which the water-based polyurethane dispersion of the invention is optionally applied, may comprise, in particular, coats of the kind customary for the construction of a dissipative coating system. They are discussed later on.

The film formation begins with the evaporation of the water as a result of which the dispersion ultimately dries.

The invention also relates to a dissipative coating system, more particularly a floor coating system, more particularly for protecting against electrostatic discharge, comprising a dissipative coating or a dissipative seal coat, the dissipative coating or seal coat being formed of the water-based polyurethane dispersion of the invention as described above. The dissipative coating system may be obtained by the method of the invention that is described above.

Dissipative coats may also be referred to as electrostatically dissipative coats. Relative to non-dissipative or insulating coats, they allow electrostatic charge which develops to be conducted away. For this purpose, dissipative coats possess a certain electrical conductivity. Dissipative and non-dissipative coats are known to the person skilled in the art.

The dissipative capacity of a coat may be determined, for example, via the resistance to ground of the coat. As used here and unless indicated otherwise, the resistance to ground of a coat may be determined in accordance with the DIN EN 61340-4-1. Here, and in accordance with DIN EN 61340 series, a coat is deemed dissipative or electrostatically dissipative if it has a resistance to ground of less than 10⁹ ohms. Coats having a greater resistance to ground are not dissipative. The resistance to ground is determined here for the coats which are in installed form, as described in DIN EN 61340-4-1. According to the invention, the coat has an electrical resistance to ground of less than 10⁷ ohms, preferably less than 10⁶ ohms, more preferably less than 10⁵ ohms. Preferably are the before mentioned values of the electrical resistance, measured as described in DIN EN 61340-4-1, obtained at an absolute humidity of 2.47 g/m³_{.}

The coat thickness of the dissipative coating or seal coat may likewise vary within wide ranges and may be selected according to the end application. The dissipative coating preferably has a coat thickness of less than 500 µm, preferably in the range from 20 to 500 µm, 20 to 300 µm, 20 to 200 µm, 30 to 100 µm, most preferably from 40 to 80 µm.

A grounding means may be located within the dissipative coating system in order to ground the coating system. The coating system may optionally comprise a layer of conductive varnish.

The dissipative coating system may comprise one, two or more dissipative coats. In the case of two or more dissipative coats in the dissipative coating system, only one, or both or all, dissipative coat(s) may be formed of the water-based polyurethane dispersion of the invention. Alternatively, only one dissipative coat may be formed of the water-based polyurethane dispersion of the invention, while for the other(s) it is possible to use a customary dissipative coat in accordance with the prior art.

One example of a construction of a dissipative coating system is shown for illustration in fig. 16. The coating system, on a substrate 1, for the purpose of protecting from electrostatic discharge, comprises, in this order, a priming coat 2 and optionally a leveling coat on the substrate 1; an optional non-dissipative coating 3; and a dissipative coating or seal coat 4.

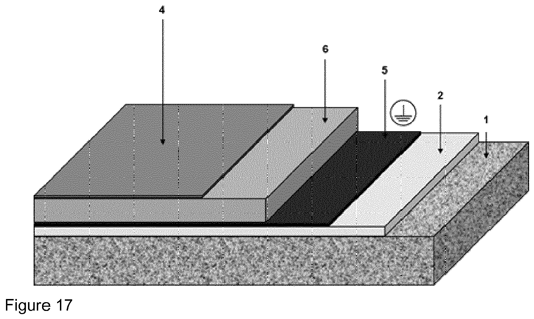

A further example of a construction of a dissipative coating system is shown for illustration in fig. 17. It consists of the following individual layers:
1. Thin-bed dissipative coating or seal coat 4
2. Thick-bed dissipative coating 6 (e.g., 10⁴ - 10⁸ ohms)
3. Conductive varnish 5 and conduction set composed, for example, of copper strips for the grounding of the system
4. Priming coat 2 and optional scratchwork filler coating
5. Substrate 1, e.g., concrete

The dissipative coats shown in figs 16 and 17 may be formed of the water-based polyurethane dispersion of the invention. In fig. 17, one of the dissipative coats may be formed of the water-based polyurethane dispersion of the invention, and the other of a customary, prior-art dissipative coat, or both dissipative coats may be formed of the water-based polyurethane dispersion of the invention.

The invention also relates to the use of the water-based polyurethane dispersion of the invention for forming dissipative coatings or seal coats in floor coating systems, especially ESD floor coating systems. The floor coating systems comprise, for example, floors for clean rooms, production facilities, assembly facilities, laboratories, stores, especially solvent stores, or medical rooms.

Preferably, the dissipative coatings or seal coats from the water-based polyurethane dispersion of the invention has the following properties:
DIN EN 61340-4-1. According to the invention, the coat has Electrical resistance, measured according to DIN EN 61340-4-1 of less than 10⁷ ohms, preferably less than 10⁶ ohms, more preferably less than 10⁵ ohms. Preferably the before mentioned electrical resistance is also obtained at an absolute humidity of 5 %, preferably 2,5%.

Preferably the measurement is performed as described in the experimental section.

Examples follow which elucidate the invention, but which are not intended in any way to restrict the scope of the invention.

### Examples

### List of reference numerals

- 1: Substrate
- 2: Priming coat
- 3: Non-dissipative (insulating) coat
- 4: Dissipative coating or seal coat
- 5: Conductive varnish
- 6: Dissipative coating or seal coat

Commercial products used are as follows:
- PUD 1: Mixture of acrylic emulsion polymer and anionically stabilised polyester PUD, solids content 43 wt% in water
- PUD 2: anionically stabilised polyester PUD, solids content 31 wt% in water
- Matting agent: Silicon dioxide, Particle size (D50) 10 µm, Acematt TS 100, Evonik
- Surface Modifier: Polyether modified dimethylpolysiloxane, Byk-378, Byk
- Defoamer: silicone-containing defoamer, Byk-019, Byk
- Co-solvent: Butyldiglycol
- UV-absorber: Tinuvin DW 400, BASF
- IL 1: Ionic liquid formulated from imidazolium salts, 1-Ethyl-3-methyl imidazolium dicyanamide, Basionic VS 03, BASF
- IL 2: Ionic liquid formulated from solid salts (Sodium dicyanamide) and quaternary nitrogen compounds, Addid 230, Evonik
- CP 1: Transparent pigment, Mica and (Sn/Sb)O₂, particle size (laser diffraction): 98 % < 15 µm, density: 3.5-3.7 /cm³, Iriotec 7310, Merck
- CP 2: Transparent pigment, Mica and (Sn/Sb)O₂, particle size (laser diffraction): 10 - 60 µm, density: 2,9 - 3,3 /cm³, Iriotec 7315, Merck
- CP 3: Transparent pigment, Mica/SiO₂ and (Sn/Sb)O₂, particle size (laser diffraction): 5 - 60 µm, density: 3.3 - 3.5 /cm³, Iriotec 7325, Merck
- CP 4: Transparent pigment, Mica/Talc and (Sn/Sb)O₂, particle size (laser diffraction): 80 % < 15 µm, density: 3.5 - 3.8 /cm³, Iriotec 7330, Merck
- CP 5: Transparent pigment, magnesium silicate hydrate / SiO₂ and (Sn/Sb)O₂, particle size (laser diffraction): 80 % < 15 µm, density: 3.2 - 3.6 /cm³, Iriotec 7340, Merck
- CP 6: Transparent pigment, Mica/SiO₂ and (Sn/Sb)O₂, particle size (laser diffraction): 5 - 60 µm, density: 3.3 - 3.5 /cm³, Iriotec 7325, Merck
- Plastorit: Plastorit 0000, natural compound of mica, quartz and chlorite

### Example

Several water-based polyurethane dispersion were formulated with the above mentioned constituents in accordance with the tables 1 - 3 below.

### Preparation of the coating compositions:

For the preparation of the compositions E1-E4 and Ref.1-Ref.10, the components indicated in tables 1 - 3 below (with the exception of the CP 1-CP 6) were mixed with a dissolver for 2 minutes. Afterwards, the transparent pigments CP 1-CP 6 were added and the mixture was mixed for a further 15 minutes before application.

### Measuring method of electrical resistance:

The electrical resistance was measured according to DIN EN 61340-4-1 (standard test method for special applications - electrical resistance of floor coverings and laid floors), Measuring electrode: d = 65 +/- 5mm; Conductive rubber 50-70 Shore A; R <1000 ohms on metal; m = 2.5 +/- 0.25 kg

The compositions E3 and E4 were measured 7 days after coating at a temperature of 20,4°C and 27% atmospheric humidity. The measurements of the electrical resistance is shown in table 2.

The compositions E1-E2 and Ref.1-Ref.10 were measured 7 days after coating at a temperature in a climate chamber. The results are shown as measured electrical resistance in ohm [Ω] versus the absolute humidity [g/m³] in the figures 1 - 7 and figures 10- 14.

### Transparency measurement

A primer (400 g/m² applied, Sikafloor-161, Sika Germany), a conductive primer, (100 g/m² applied, Sikafloor-220W Conductive, Sika Germany), a conductive self-leveling film (1000 g/m² applied, Sikafloor-169 ESD, Sika Germany) and as a top coat the compositions 100 g/m² E1-E4 and Ref.1-Ref.10 were applied to a fiber cement slab.

Ref.4 was then read into a spectrophotometer (Minolta CM2500, Prisma Paint program from Treepoint) as the color standard, and the difference between the brightness (dL) was then measured. The results are shown in table 1 as well as in figure 15.

**Table 1**

| Raw material | **E1** | **Ref.1** | **Ref.2** | **Ref.3** | **E2** | **Ref.4** | **Ref.5** |
|---|---|---|---|---|---|---|---|
| PUD 1 | 44.6 | 44.6 | 46.1 | 45.6 | 45.1 | 46.6 | 39.8 |
| Matting agent | 0.9 | 0.9 | 0.9 | 0.9 | 0.9 | 0.9 | 0.9 |
| CP 6 | 5 | 0 | 2 | 3 | 4 | 0 | 12.5 |
| Plastorit | | 5 | | | | | |
| PUD 2 | 38.5 | 38.5 | 40 | 39.5 | 39 | 41.5 | 39.8 |
| Defoamer | 0.4 | 0.4 | 0.4 | 0.4 | 0.4 | 0.4 | 0.4 |
| Plasticizer | 4.45 | 4.45 | 4.45 | 4.45 | 4.45 | 4.45 | 4.45 |
| Surface Mod. | 0.15 | 0.15 | 0.15 | 0.15 | 0.15 | 0.15 | 0.15 |
| UV-absorber | 2 | 2 | 2 | 2 | 2 | 2 | 2 |
| IL 1 | 4 | 4 | 4 | 4 | 4 | 4 | 0 |
| Sum | 100 | 100 | 100 | 100 | 100 | 100 | 100 |
| Delta L | 7.3 | 0.9 | 3.3 | 4.6 | 6.4 | standard | 14.5 |

**Table 2**

| Raw material | **E3** | **E4** |
|---|---|---|
| PUD 1 | 46.2 | 46.2 |
| Matting agent | 1.5 | 1.5 |
| CP 3 | 5 | 5 |
| PUD 2 | 40.6 | 40.6 |
| Defoamer | 0.5 | 0.5 |
| Surface Mod. | 0.2 | 0.2 |
| UV-absorber | 2 | 2 |
| IL 1 | | 4 |
| IL 2 | 4 | |
| Sum (wt.-%) | 100 | 100 |
| Electrical resistance [Ω], 7d (20,4°C/27% relative humidity) | 4.40E+05 | 3.80E+05 |

**Table 3**

| Raw material | **Ref.6** | **Ref.7** | **Ref.8** | **Ref.9** | **Ref.10** |
|---|---|---|---|---|---|
| PUD 1 | 40.5 | 40.5 | 40.5 | 40.5 | 40.5 |
| Matting agent | 0.9 | 0.9 | 0.9 | 0.9 | 0.9 |
| CP 1 | | | | | 12.5 |
| CP 2 | | | | 12.5 | |
| CP 6 | | | 12.5 | | |
| CP 4 | | 12.5 | | | |
| CP 5 | 12.5 | | | | |
| PUD 2 | 41 | 41 | 41 | 41 | 41 |
| Defoamer | 0.5 | 0.5 | 0.5 | 0.5 | 0.5 |
| Plasticizer | 4.45 | 4.45 | 4.45 | 4.45 | 4.45 |
| Surface Mod. | 0.15 | 0.15 | 0.15 | 0.15 | 0.15 |
| Sum (wt.-%) | 100 | 100 | 100 | 100 | 100 |

## Claims

1. A water-based polyurethane dispersion comprising
A) a polyurethane, preferably a chain-extended polyurethane,
B) 2 - 10 weight-% of at least one ionic liquid (IL), based on the total weight of the water-based polyurethane dispersion, and
C) 3.5 - 10 weight-% of at least one transparent electrically conductive pigment (CP), based on the total weight of the water-based polyurethane dispersion.

2. The water-based polyurethane dispersion as claimed in claim 1, **characterized in that** the water-based polyurethane dispersion contains 20 to 55 % by weight, preferably 25 to 50 % by weight, of the polyurethane, based on the total weight of the water-based polyurethane dispersion.

3. The water-based polyurethane dispersion as claimed in any of the proceeding claims, **characterized in that** the water-based polyurethane dispersion contains 40 to 70 % by weight, preferably 50 to 60 % by weight, of water, based on the total weight of the water-based polyurethane dispersion.

4. The water-based polyurethane dispersion as claimed in any of the proceeding claims, **characterized in that** the polyurethane, preferably the chain-extended polyurethane, has ionic groups, preferably anionic groups, or contains polyethylene oxide units.

5. The water-based polyurethane dispersion as claimed in any of the proceeding claims, **characterized in that** the ionic liquid (IL) is selected from the list consisting of ethoxylated alkyl amides, glycerol stearates, fatty acid esters, cationic polyacylates, esters or ethers of polyols and sodium alkyl sulfonates, quaternary ammonium compounds, alkylphosphates, sodium dicyanamide and liquid salts, preferably quaternary ammonium compounds, sodium dicyanamide and liquid salts, most preferably liquid salts.

6. The water-based polyurethane dispersion as claimed in any of the proceeding claims, **characterized in that** the water-based polyurethane dispersion contains the ionic liquid (IL) in an amount of 3 - 8 weight-%, preferably 4 - 5 weight-%, based on the total weight of the water-based polyurethane dispersion.

7. The water-based polyurethane dispersion as claimed in any of the proceeding claims, **characterized in that** transparent electrically conductive pigment (CP) is based on substrates which are coated with a conductive layer, wherein the substrates are substrates selected from the list consisting of phyllosilicates, in particular synthetic or natural mica, glass, SiO₂, TiO₂, Al₂O₃, sericite, kaolin, talc and mixtures thereof.

8. The water-based polyurethane dispersion as claimed in any of the proceeding claims, **characterized in that** the water-based polyurethane dispersion contains the transparent electrically conductive pigment (CP) in an amount of 3.5 - 8 weight-%, preferably 5 - 5.5 weight-%, based on the total weight of the water-based polyurethane dispersion.

9. A method for producing a dissipative coating system, preferably a floor coating system, comprising a dissipative coating or a dissipative seal coat comprising a water-based polyurethane dispersion as claimed in any of claims 1 to 8, which comprises
a) applying the water-based polyurethane dispersion composition to a substrate,
b) optionally smoothing or deaerating the applied dispersion, and
c) drying the applied dispersion to give the dissipative coating or seal coat.

10. A dissipative coating system, more particularly floor coating system, comprising a dissipative coating or a dissipative seal coat, where the dissipative coating or seal coat is formed from the water-based polyurethane dispersion as claimed in any of claims 1 to 8.

11. The dissipative coating system as claimed in claim 10, obtainable by a method as claimed in claim 9

12. The dissipative coating system as claimed in claim 10 or claim 11, where the dissipative coating or seal coat has a resistance to ground of less than 10⁷ ohms, determined according to IEC 61340-4-1, preferably less than 10⁶ ohms, more preferably less than 10⁵ ohms, most preferably the before mentioned electrical resistance is also obtained at an absolute humidity of 5 %, preferably 2,5%.

13. The dissipative coating system as claimed in any of claims 10 to 12, wherein the coating system accommodates a grounding means for grounding the coating system, and/or the coating system optionally comprises a conductive varnish layer.

14. The use of a water-based polyurethane dispersion as claimed in any of claims 1 to 7 for forming dissipative coatings or dissipative seal coats in coating systems or floor coating systems, especially for protection from electrostatic discharge.

15. The use as claimed in claim 14 for floor coating systems in clean rooms, production facilities, assembly facilities, laboratories, stores, especially solvent stores, and medical rooms.
